Europäisches Patentamt

(19) European Patent Office

Office européen des brevets

(11) Numéro de publication: **0 012 668**
B1

(12) **FASCICULE DE BREVET EUROPEEN**

(45) Date de publication du fascicule de brevet: **16.09.81**

(51) Int. Cl.³: **F 03 B 13/08**

(21) Numéro de dépôt: **79400965.4**

(22) Date de dépôt: **04.12.79**

(54) **Centrale hydro-électrique.**

(30) Priorité: **14.12.78 FR 7835189**

(43) Date de publication de la demande:
**25.06.80 Bulletin 80/13**

(45) Mention de la délivrance du brevet:
**16.09.81 Bulletin 81/37**

(84) Etats Contractants Désignés:
**AT BE CH DE FR GB IT LU NL SE**

(56) Documents cités:

    CH - A - 329 154
    DE - C - 912 320
    FR - A - 990 190
    FR - A - 1 050 248
    FR - A - 1 051 731
    FR - A - 1 060 860
    FR - A - 1 546 206
    US - A - 3 184 218
    US - A - 4 078 388

**BROWN-BOVERI MITTEILUNGEN, vol. 61, n° 7, juillet, 1974;**
**SCHWANDA et OSMER: "Die Konstruktion direkt angetriebener Rohrturbinen-Generatoren",**
**pages 332—335**

(73) Titulaire: **SPIE-BATIGNOLLES Société Anonyme Française**
**Tour Anjou 33, quai de Dion-Bouton**
**F-92806 Puteaux (FR)**

(72) Inventeur: **Cros, Pierre**
**163/169 Boulevard Murat**
**F-75016 Paris (FR)**

(74) Mandataire: **Bouju, André**
**38 Avenue de la Grande Armée**
**F-75017 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Centrale hydro-électrique

La présente invention concerne une centrale hydro-électrique de basse chute.

Les centrales de ce genre comprennent généralement un barrage séparant un bief amont et un bief aval d'un cours d'eau. Dans une conduite pratiquée à la base du barrage est située une turbine reliée mécaniquement à l'arbre d'une génératrice électrique, en général par l'intermédiaire d'un multiplicateur de vitesse.

Dans les centrales de basse chute, l'emplacement à donner à la génératrice présente une certaine difficulté du fait de la faible hauteur du barrage auquel on ne peut pas donner les extensions maçonnées suffisantes pour loger cette machine. On a envisagé de la placer en aval du barrage, sur un ouvrage spécial, mais il en résulte un coût de génie civil important, et l'écoulement de l'eau en aval s'en trouve partiellement entravé.

Une solution connue consiste à utiliser un groupe bulbe, dans lequel la génératrice est enfermée dans un carter profilé sensiblement de révolution autour de l'axe commun de la turbine et de la génératrice. La turbine se trouve située à la pointe du carter, l'ensemble présentant un profil hydrodynamique étudié pour éviter les décollements de la couche-limite et les tourbillons.

Une cheminée débouchant à l'air libre assure en permanence l'aération de la génératrice et permet à un homme de descendre à l'intérieur du carter aux fins d'entretien. Elle s'élève au-dessus du niveau des crues.

Dans les groupes-bulbes d'une certaine importance, correspondant à de forts débits d'eau, les dimensions transversales de la cheminée sont faibles devant celles du bulbe, de sorte que l'écoulement de l'eau dans la conduite annulaire autour du bulbe n'est que faiblement perturbé. Il en va tout autrement avec les petits groupes, destinés à traiter de faibles débits d'eau, dans lesquels la section de la cheminée est de l'ordre de grandeur de la section du bulbe. On est alors obligé de recourir à d'autres solutions telles que celle évoquée plus haut, ou celle consistant à loger la génératrice dans une galerie ménagée dans la masse du barrage, ce qui, entre autre inconvénients, contraint à conférer au canal d'écoulement des sinuosités génératrices de pertes de charge.

La présente invention vise à réaliser une centrale hydro-électrique qui, même en cas de basse chute et de faible débit, relève d'une construction simple et économique sans entraîner de pertes de charge notable en amont comme en aval de la turbine.

Suivant l'invention, la centrale hydro-électrique de basse chute comprend un barrage qui ménage sur un cours d'eau un bief amont et un bief aval, au moins une turbine située dans un canal pratiqué à la base du barrage, et au moins une génératrice électrique reliée aux turbines logée dans une enceinte totalement immergée. Elle est caractérisée en ce que cette enceinte est située dans le bief amont, à distance du barrage et de la turbine, et en amont de la zone de mise en vitesse de l'eau, cette enceinte comportant une cheminée de visite s'ouvrant au-dessus du niveau normal de l'eau et étant fixée sur un radier de manière amovible et démontable.

En raison de la distance suffisante ménagée, on peut, sans perturber l'écoulement, donner à l'enceinte des dimensions relativement grandes, permettant un accès aisé aux machines, et la munir d'une cheminée d'accès de dimensions raisonnables.

En outre, le caractère amovible et démontable de l'enceinte et de son contenu permet d'assembler complètement cet ensemble en usine, réduisant le travail de montage sur le site. On peut aussi, en cours d'exploitation, démonter l'ensemble pour procéder à une réparation sur la rive du cours d'eau.

Dans de nombreux cas, les conditions de l'écoulement sont telles qu'il suffit que l'enceinte soit entièrement située à une distance de la turbine au moins égale à deux fois le diamètre de la roue de la turbine. Il est exceptionnel que l'on soit obligé de donner à cette distance une valeur supérieure à dix fois le diamètre de la roue.

Suivant une réalisation préférée de l'invention, la génératrice est reliée mécaniquement aux turbines par des dispositifs respectifs à renvoi d'angle à 90°, de manière que l'arbre de la génératrice soit sensiblement horizontal et perpendiculaire à la direction d'écoulement de l'eau dans le cours d'eau.

On sait que l'arbre de la turbine présente en général une certaine inclinaison vers l'aval, notamment pour que le diffuseur conique de la turbine soit toujours en charge. Grâce à la disposition indiquée, on obtient le double avantage d'un encombrement axial réduit et d'une position horizontale de l'arbre de la génératrice, ce qui lui confère un aplomb mécaniquement satisfaisant.

Dans le cas relativement fréquent où un multiplicateur de vitesse est nécessaire, l'invention prévoit avantageusement de combiner ce multiplicateur avec le dispositif à renvoi d'angle.

Suivant une réalisation avantageuse de l'invention, la centrale comprend plusieurs turbines dont les arbres sont reliés chacun à un dispositif à renvoi d'angle, les arbres de sortie de ces dispositifs étant disposés suivant des paires coaxiales et reliés mécaniquement à l'arbre de la génératrice.

Cette disposition est particulièrement avantageuse dans le cas des centrales de basse chute, où le diamètre admissible pour la conduite d'eau est limité, et où, par conséquent, la puissance de chaque turbine est également limitée. L'invention permet alors de regrouper plusieurs de ces turbines sur une même génératrice plus puissante assortie d'une armoire de contrôle unique.

Suivant une réalisation perfectionnée de l'invention, les arbres coaxiaux des dispositifs à renvoi d'angle sont reliés à l'arbre de la génératrice par l'intermédiaire d'un variateur de vitesse, de manière à pouvoir conserver une vitesse constante de la génératrice malgré des conditions hydrauliques variables.

Toujours dans le cas de deux turbines accouplées à une même génératrice, chaque dispositif à renvoi d'angle est muni, sur son arbre de sortie, d'un dispositif d'embrayage.

On peut alors facilement mettre en service ou hors service l'une des deux turbines sans avoir à arrêter le fonctionnement de la centrale.

Suivant une réalisation préférée de l'invention, la centrale comprend un clapet mobile d'obturation pour le conduite d'eau dans le barrage, ce clapet étant monté coulissant sur l'arbre de la turbine et actionnable par des moyens de commande fixés à l'enceinte.

Ce dispositif d'obturation est à la fois moins onéreux et plus fiable que des aubages orientables, dont la télécommande est également onéreuse et complexe.

Suivant l'invention, les moyens de commande du clapet comprennent des vérins hydrauliques fixés à l'enceinte, c'est-à-dire un dispositif économique et robuste.

Par mesure de sécurité, les vérins comprennent des ressorts disposés pour appliquer le clapet sur la conduite, en cas de manque de pression du fluide hydraulique.

Suivant un perfectionnement avantageux de l'invention, il est prévu un tube fixé sur l'enceinte, coaxial à l'arbre de la turbine, pour servir d'appui au clapet en position ouverte de ce dernier.

En position ouverte, le clapet ne bénéficie plus d'un appui sur le siège. Le dispositif précité lui assure cet appui pour l'empêcher d'entrer en vibration.

Suivant une réalisation préférée de l'invention, la chambre de visite comprend un sas étanche.

La cheminée peut se trouver submergée accidentellement, par exemple à l'occasion des plus fortes crues, sans dommage pour les machines contenues dans l'enceinte. On peut donc construire des cheminées relativement peu élevées, préservant les sites.

Suivant un perfectionnement important de l'invention, le sas étanche est en communication avec une cloche immergée dont le bord inférieur de la jupe est situé approximativement au niveau de l'entrée de l'arbre de la turbine dans l'enceinte.

Grâce à cette disposition, il règne en permanence dans les sas une pression qui croît avec la hauteur d'immersion et qui contribue à empêcher les infiltrations d'eau dans l'enceinte en cas de défauts accidentels d'étanchéité.

Suivant une réalisation préférée de l'invention, l'enceinte comporte une double enveloppe, et des ventilateurs sont calés sur les arbres des machines tournantes pour faire circuler l'air dans la double enveloppe.

On obtient ainsi une convection suffisante sur l'enveloppe extérieure de l'enceinte pour limiter la température à l'intérieur.

Dans une réalisation perfectionée de l'invention, il est prévu une batterie de réfrigération à eau située dans l'enceinte sur le parcours de circulation d'air. Cette batterie de réfrigération peut être avantageusement reliée par des tuyauteries à une installation de récupération de chaleur.

En variante, ou en combinaison, l'enceinte comprend des poutres pour supporter les machines tournantes, ces poutres étant creuses et en communication avec le cours d'eau.

D'autres particularités et avantages de l'invention ressortiront encore de la description détaillée qui va suivre.

Aux dessins annexés, donnés à titre d'exemples non limitatifs:

— la figure 1 est une vue d'ensemble en coupe, en élévation, d'une centrale conforme à l'invention, suivant I—I de la figure 2,

— la figure 2 est une vue en plan en coupe suivant II—II de la figure 1,

— la figure 3 est une vue en élévation, analogue à la figure 1, mais à plus grande échelle, suivant III—III de la figure 2,

— la figure 4 est une vue en coupe suivant IV—IV de la figure 3,

— la figure 5 est une vue analogue à la figure 4, mais dans une forme de réalisation à une seule turbine,

— la figure 6 est une vue en coupe en élévation semi-schématique montrant la cloche adjointe au sas,

— la figure 7 est une vue en coupe en plan semi-schématique montrant la double paroi de l'enceinte,

— la figure 8 est une coupe suivant VIII—VIII de la figure 7,

— la figure 9 est une vue en coupe en élévation, semi-schématique, montrant l'installation d'une batterie de réfrigération,

— la figure 10 est une vue en coupe transversale semi-schématique montrant l'installation d'une poutre creuse,

— la figure 11 est une vue de détail montrant la réalisation de la double paroi.

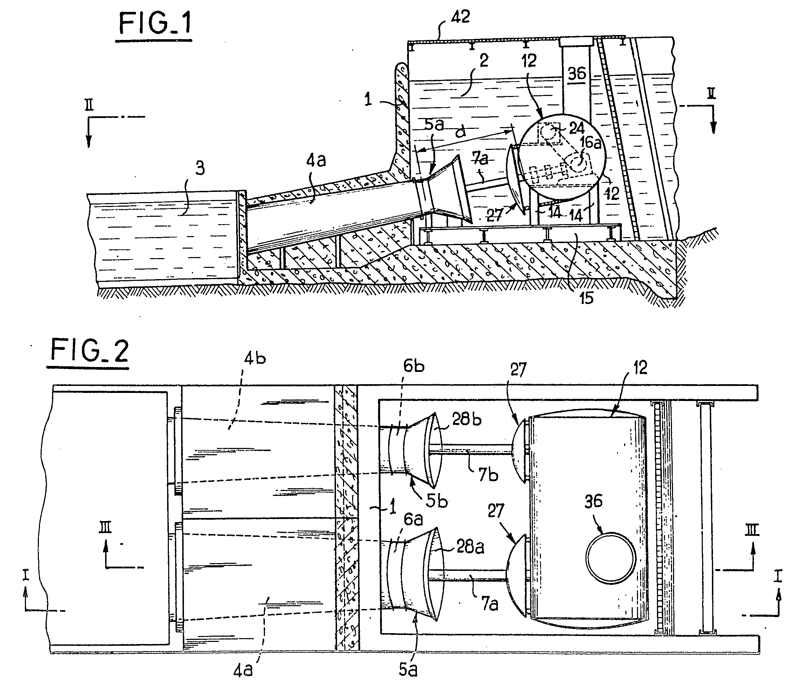

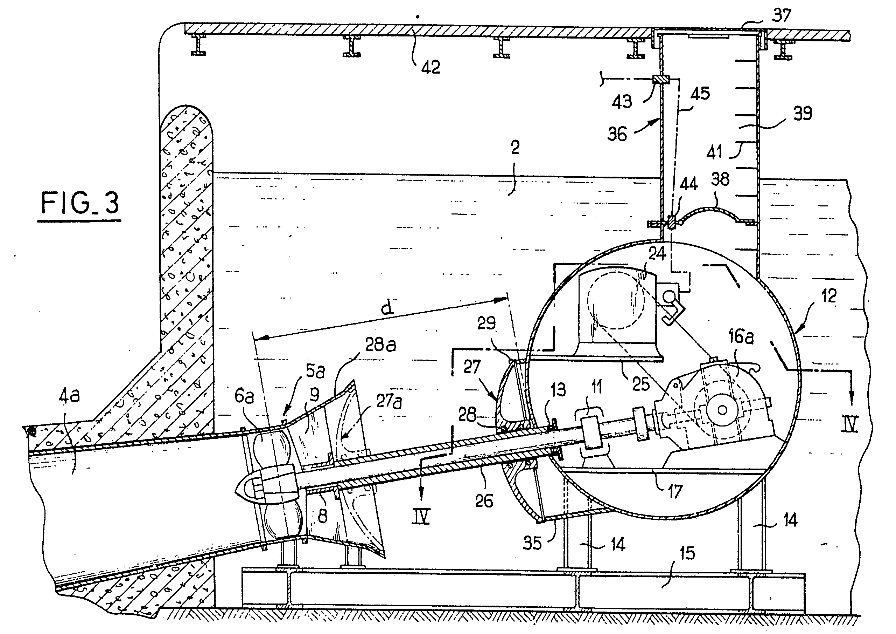

En référence aux figures 1 à 4, la centrale hydro-électrique conforme à l'invention comprend un barrage 1 définissant sur un cours d'eau un bief amont 2 et un bief aval 3.

Dans des conduites 4a, 4b, pratiquées à la base du barrage sont logées des turbines respectives 5a, 5b, dont les roues 6a, 6b sont calées sur les arbres respectifs 7a, 7b.

Chaque arbre 7a, 7b est porté, d'une part, par un palier 8 à coussinet en caoutchouc, monté au centre d'un distributeur en étoile 9 et, d'autre part, par un palier 11 situé à l'intérieur d'une enceinte 12 dans laquelle l'arbre entre par une garniture étanche 13.

L'enceinte 12 est en tôle, supportée par des pieds 14 reposant sur un radier 15 et entièrement immergée dans le bief amont 2. Le radier 15 est entièrement indépendant de la structure du barrage 1, et les pieds 14 sont prévus démontables de ce radier, grâce par exemple à une fixation par boulons. L'enceinte 12 est située à une distance suffisante des roues 6a, 6b des turbines pour que la perturbation que sa présence crée dans l'écoulement de l'eau soit négligeable au niveau des roues. Dans l'exemple décrit, l'enceinte est entièrement située à une distance d des roues, un peu supérieure à deux fois le diamètre de la plus grande de ces roues, dans une région où la vitesse de l'eau est celle du cours d'eau en amont.

Dans l'exemple décrit, l'enceinte 12 est cylindrique, d'axe horizontal et parallèle au barrage, et son diamètre est d'environ deux mètres, pour permettre à un homme de venir facilement visiter les machines.

Dans l'enceinte 12, chacun des arbres 7a, 7b est accouplé à l'arbre d'entrée d'un multiplicateur de vitesse 16a, 16b reposant sur un plancher 17. Les arbres de sortie respectifs 18a, 18b des multiplicateurs sont à 90° des arbres d'entrée, de manière à former des renvois d'angle.

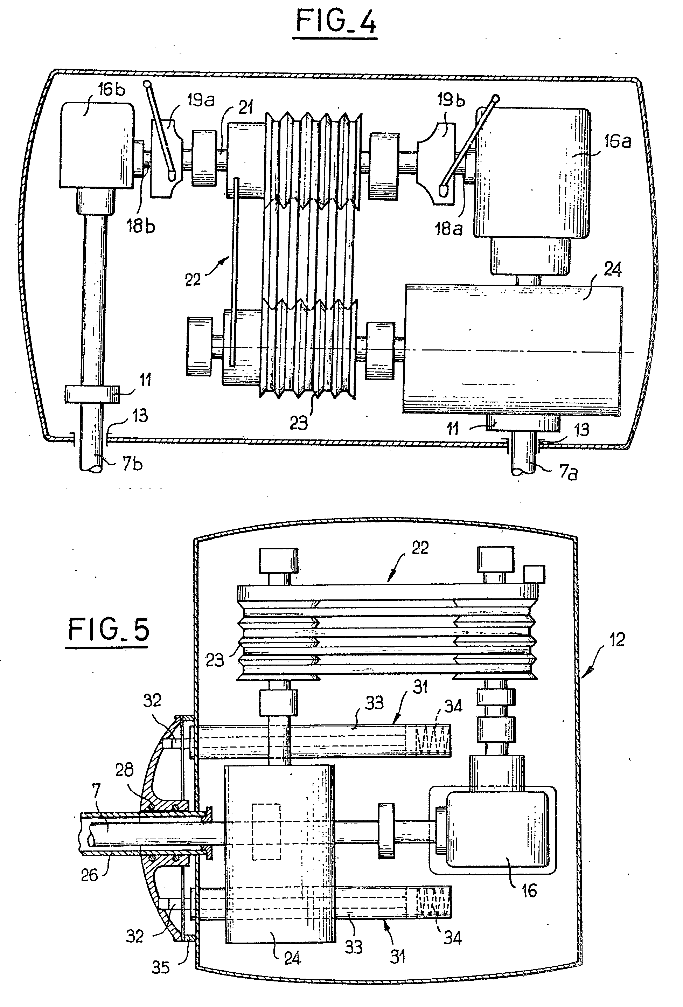

Ces arbres de sortie sont en outre coaxiaux (fig. 4), et accouplés par des dispositifs d'embrayage 19a, 19b à un arbre intermédiaire commun 21 constituant l'arbre d'entrée d'un variateur de vitesse 22 à courroies trapézoïdales, dont la poulie de sortie 23 est calée sur l'arbre d'une génératrice électrique 24 placée sur un plancher 25.

On représenté, sur la figure 5, une variante de réalisation dans laquelle la centrale ne comprend qu'une seule turbine.

L'arbre unique 7 est relié à un multiplicateur 16 dont l'arbre de sortie attaque un variateur de vitesse 22 dont la poulie de sortie 23 est calée sur l'arbre d'une génératrice électrique 24.

Dans les deux cas, il résulte de la structure décrite que l'arbre de la génératrice est sensiblement horizontal et perpendiculaire à la direction d'écoulement de l'eau dans le cours d'eau.

Chacun des arbres 7a, 7b, est contenu dans un tube 26 coaxial, fixé à chaque extrémité respectivement au distributeur 9 de la conduite et à l'enceinte 12. Ce tube est percé de trous suivant sa génératrice inférieure, de manière que l'eau puisse y circuler librement. La garniture étanche 13 mentionnée plus haut est précisément fixée sur l'extrémité du tube 26 qui pénètre dans l'enceinte 12. Un clapet 27 coaxial à chaque tube 26 est monté coulissant sur le tube grâce à des moyens adéquats, tels que des roulements 28. Ce clapet est en calotte sphérique, d'un diamètre tel qu'il puisse venir s'appliquer sur la tuyère 28a, 28b d'entrée de la turbine pour l'obturer en position 27a. A cet effet, il comporte un joint périphérique 29 en caoutchouc.

Deux vérins 31 jumelés situés dans l'enceinte 12 et parallèles à chacun des arbres 7a, 7b ont leurs tiges 32 fixées au clapet 27 et leurs corps 33 fixés à l'enceinte 12. Pour plus de clarté, ces vérins n'ont été représentés que sur la figure 5. Leur course est telle qu'ils puissent faire déplacer le clapet 27 entre sa position fermée 27a et sa position ouverte 27. Ils sont reliés, par des canalisations non représentées, à une source de fluide hydraulique sous pression par l'intermédiaire de robinets de commande. En outre, ils comprennent chacun un ressort 34 qui tend, en cas de manque de pression du fluide hydraulique, à amener le clapet 27 en position fermée 27a.

Un tube 35, coaxial à chaque arbre 7a, 7b est fixé sur l'enceinte 12 et présente un diamètre égal au diamètre du clapet 27 pour recevoir ce dernier en appui dans sa position ouverte.

Une cheminée d'accès 36 est fixée sur l'enceinte 12 et s'élève jusqu'à une certaine hauteur au-dessus du niveau normal de l'eau dans le bief amont 2. Cette cheminée comporte un couvercle étanche 37 à sa partie supérieure et un autre couvercle étanche 38 au voisinage de l'enceinte 12, de manière à ménager un sas étanche 39 entre ces deux couvercles. Des échelons 41 permettent au personnel de descendre dans l'enceinte 12 à partir d'un plancher d'accès 42.

Des presse-étoupes 43 et 44 placés respectivement dans la paroi de la cheminée et dans une partie fixe du couvercle 38 permettent la sortie des câbles de raccordement électrique 45.

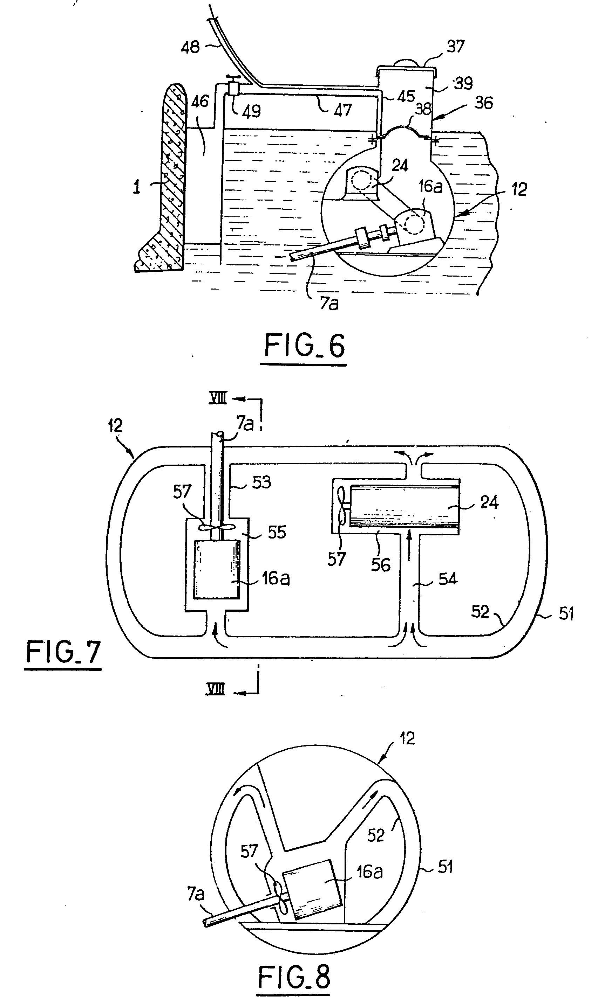

Dans une réalisation perectionnée de l'invention, indiquée ici à titre de variante (figure 6), une cloche immergée 46, ouverte à sa partie inférieure est fixée contre le barrage 1 et communique par une conduite 47 avec la cheminée 36. Le bord inférieur de la cloche 46 se situe approximativement au niveau de l'entrée des arbres 7a, 7b, dans l'enceinte 12.

Les câbles électriques 45 empruntent la conduite 47 et sortent par une dérivation 48 de cette conduite.

Une vanne 49 sur la conduite 47 permet d'isoler la cloche du sas quand on ouvre ce dernier. Enfin, la conduite 48 est reliée à une source d'air comprimé non représentée.

L'enceinte 12 comporte (figures 7 et 8) une enveloppe extérieure 51 et une enveloppe intérieure 52. Des canalisations 53, 54 sont ménagées dans l'enveloppe intérieure 52 et les machines tournantes 16a, 24 sont logées dans des cavités 55, 56 situées sur le parcours de ces canalisations. Chacune des machines est munie d'un ventilateur 57 pour faire circuler l'air dans l'intervalle entre les enveloppes, en circuit fermé.

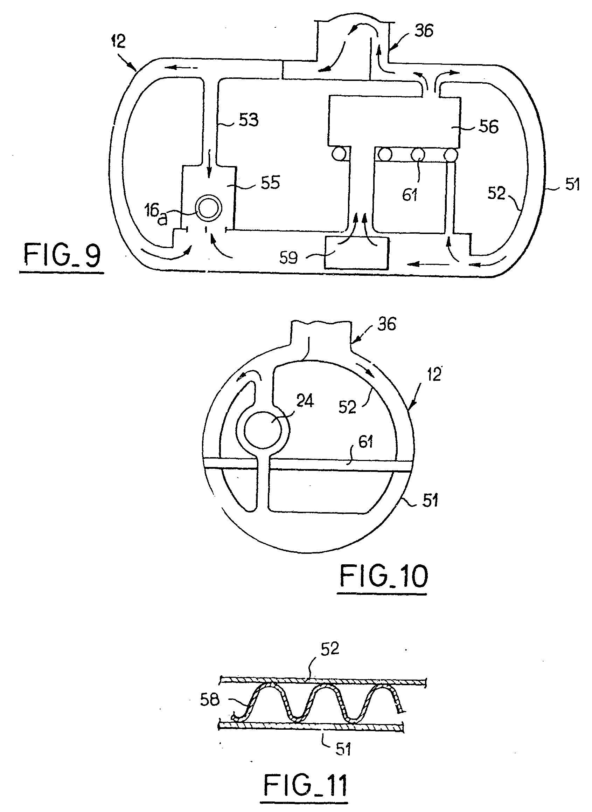

La fixation de l'enveloppe intérieure 52 sur l'enveloppe extérieure 51 s'effectue par l'intermédiaire de tôles ondulées 58 (figure 11), ou par l'intermédiaire de nervures.

Suivant une variante de réalisation de l'invention (figure 9), une batterie de réfrigération à eau 59, reliée à l'extérieur par des tuyauteries de circulation non représentées, permet de récupérer une partie de la chaleur dégagée par les machines.

Suivant une autre variante de réalisation de l'invention, certaines poutres sur lesquelles reposent les planchers 17 et 25 supportant les machines tournantes sont constituées par des tubes 61 communiquant avec le bief amont et donnant lieu à une circulation d'eau.

On va maintenant expliquer le fonctionnement de l'installation ainsi décrite.

Le clapet 27 étant ouvert sur les deux tuyères 28a, 28b, l'eau s'écoule dans les turbines et met en rotation les arbres 7a, 7b pour actionner la génératrice 24 par l'intermédiaire des multiplicateurs 16a, 16b de l'arbre commun 21 et du variateur 22.

Etant donné la distance relativement grande entre l'enceinte 12 et les tuyères, la perturbation du courant provoquée par la présence de l'enceinte est complètement amortie au niveau des tuyères. Cette perturbation est d'ailleurs elle-même très faible, du fait que l'enceinte 12 se trouve dans une région où la vitesse de l'eau est faible.

On règle le variateur de vitesse 22 pour obtenir sur la génératrice 24 la vitesse désirée, suivant les conditions hydrauliques du moment.

En fonction de la réserve hydraulique disponible, ou de la puissance électrique demandée, on peut mettre hors service ou en service l'une des deux turbines grâce aux dispositifs d'embrayage 19a, 19b.

La hauteur de la cheminée 36 étant limitée au plancher 42 pour ne pas nuire au site, cette dernière peut se trouver submergée pendant les plus hautes crues. Grâce aux deux couvercles étanches 37 et 38, l'eau n'envahit pas l'enceinte, et la seule conséquence des crues est d'empêcher la visite des machines pendant un temps relativement court.

En période de niveau normal, l'accès aux machines est aisé en raison des dimensions relativement grandes qui peuvent être données à la cheminée et à l'enceinte, sans risque de perturber l'écoulement dans les tuyères pour les raisons expliquées plus haut.

La réalisation de la figure 6 correspond au cas où l'on veut se prémunir contre toute infiltration d'eau provenant, par exemple, d'une fuite accidentelle à la garniture d'étanchéité 13. La contre-pression provenant de la cloche et s'exerçant au niveau de la garniture fait obstacle à l'entrée d'eau.

Une fuite par les couvercles 37 et 38 peut donner lieu à légère accumulation d'eau au fond de l'enceinte, ce qui est sans importance en raison des grandes dimensions de cette dernière. Si le niveau de l'eau dans l'enceinte dépasse le niveau de la garniture 13, la surpression aura tendance à chasser cette eau au travers de la graniture.

Les fuites d'air qui pourraient, à la longue, se produire dans l'ensemble de la cloche et du sas peuvent être compensées par une injection d'air comprimé.

Bien entendu, lorsqu'on ouvre le sas, il convient de fermer préablement la vanne 49 pour éviter la montée de l'eau dans la cloche 46.

Lorsque les machines tournent, les ventilateurs 57 font circuler l'air entre l'enveloppe extérieure 51 et l'enveloppe intérieure 52, ce qui procure un échange de chaleur suffisant entre l'air et la paroi extérieure 51 pour maintenir l'intérieur de l'enceinte à une température suffisamment basse, la chaleur produite étant finalement évacuée à la rivière.

Dans la réalisation de la figure 9, la batterie de refroidissement à eau permet de récupérer la chaleur dégagée, par exemple pour le chauffage de locaux de service.

Les tubes d'eau 61 (fig. 10) améliorent encore le refroidissement en procurant une surface froide supplémentaire.

Enfin l'invention prévoit avantageusement de disposer dans l'enceinte 12 une pompe d'assèchement (non représentée) en vue d'évacuer l'eau provenant notamment d'infiltrations accidentelles.

L'invention résout le problème de l'exploitation des très basses chutes en permettant de s'affranchir du faible espace disponible. L'installation des machines et de ses moyens d'accès peut être relativement volumineuse sans perturber pour autant l'écoulement. En outre, l'utilisation des commandes à renvoi d'angle à 90° permet, d'une part, de relier facilement deux turbines à une même génératrice et, d'autre part, de disposer l'encombrement de l'ensemble suivant la largeur du cours d'eau, c'est-à-dire sans nécessiter l'aménagement du cours d'eau, suivant une grande longueur, et sans augmenter l'encombrement en hauteur.

Les travaux de génie civil sont minimisés, et le montage est simple. En raison de la légèreté du matériel, ce dernier peut, dans une large mesure, être assemblé et monté en usine, puis transporté tout monté sur le site où il ne reste plus qu'à l'implanter.

Inversement, la possibilité de démontage des pieds 14 prévue plus haut permet, en cas de dérangement important, de sortir tout l'ensemble de l'eau pour procéder à loisir à une réparation sur la rive du cours d'eau.

Le distributeur 9 est facilement accessible en marche et peut être facilement débarrassé de corps étrangers qui viendraient à l'obturer.

Un autre avantage important de l'invention est lié au fait que l'on peut accoupler plusieurs turbines de diamètre réduit sur une même génératrice. Cette réduction de diamètre, outre qu'elle permet d'opérer sur des hauteurs de chute très basses permet, de plus, d'augmenter la vitesse des turbines, donc de diminuer le couple et également de diminuer le rapport du multiplicateur de vitesse.

Bien entendu, l'invention ne se limite pas aux exemples décrits, mais couvre toute variante constructive à la portée de l'homme de l'art, notamment celles qui ont été signalées dans la description.

On peut par exemple coupler plus de deux turbines à une même génératrice. Dans le cas de quatre turbines, les quatre multiplicateurs de vitesse sont groupés, deux par deux, chaque paire ayant ses arbres de sortie coaxiaux. On utilise alors deux variateurs de vitesse eux-mêmes couplés à l'arbre de la turbine.

**Revendications**

1. Centrale hydro-électrique de basse chute, comprenant un barrage (1) qui ménage sur un cours d'eau un bief amont (2) et un bief aval (3), au moins une turbine (5a, 5b) située dans une conduite de mise en vitesse de l'eau pratiquée à la base du barrage (1), et au moins une génératrice électrique (24) reliée aux turbines (5a, 5b) logée dans une enceinte (12) totalement immergée, caractérisée en ce que cette enceinte (12) est située dans le bief amont (2), à distance de barrage (1) et de la turbine (5a, 5b), et en amont de la zone de mise en vitesse de l'eau, cette enceinte (12) comportant une cheminée (36) de visite s'ouvrant au-dessus du niveau normal de l'eau et étant fixée sur un radier (15) de manière amovible et démontable.

2. Centrale hydro-électrique conforme à la revendication 1, caractérisée en ce que l'enceinte (12) est entièrement située à une distance (d) de la turbine (5a, 5b) au moins égale à deux fois le diamètre de la roue (6a, 6b) de la turbine.

3. Centrale hydro-électrique conforme à l'une des revendications 1 ou 2, caractérisée en ce que la génératrice électrique (24) est reliée mécaniquement aux turbines (5a, 5b) par des dispositifs respectifs à renvoi d'angle à 90°, de manière que l'arbre de la génératrice électrique (24) soit sensiblement horizontal et perpendiculaire à la direction d'écoulement de l'eau dans le cours d'eau.

4. Centrale hydro-électrique conforme à la revendication 3, caractérisée en ce que le dispositif à renvoi d'angle comporte un organe multiplicateur de vitesse (16a, 16b).

5. Centrale hydro-électrique conforme à l'une des revendications 3 ou 4, caractérisée en ce que qu'elle comprend plusieurs turbines (5a, 5b) dont les arbres sont reliés chacun à un dispositif à renvoi d'angle, les arbres de sortie de ces dispositifs étant disposés suivant des paires coaxiales et reliés mécaniquement à l'arbre de la génératrice électrique.

6. Centrale hydro-électrique conforme à la revendication 5, caractérisée en ce que les arbres coaxiaux des dispositifs à renvoi d'angle sont reliés à l'arbre de la génératrice électrique par l'intermédiaire d'un variateur de vitesse (22).

7. Centrale hydro-électrique conforme à l'une des revendications 5 ou 6, caractérisée en ce que chaque dispositif à renvoi d'angle est muni, sur son arbre de sortie (18a, 18b) d'un dispositif d'embrayage (19a, 19b).

8. Centrale hydro-électrique conforme à l'une des revendications 1 à 7, caractérisée en ce qu'elle comprend un clapet (27) mobile d'obturation pour la conduite d'eau dans le barrage, ce clapet étant monté coulissant sur l'arbre (7a, 7b) de la turbine (5a, 5b) et actionnable par des moyens de commande fixés à l'enceinte (12).

9. Centrale hydro-électrique conforme à la revendication 8, caractérisée en ce que les moyens de commande du clapet (27) comprennent des vérins (31) hydrauliques, fixés à l'enceinte (12).

10. Centrale hydro-électrique conforme à la revendication 9, caractérisée en ce que les vérins (31) comprennent des ressorts (34) disposés pour appliquer le clapet (27) sur la conduite.

11. Centrale hydro-électrique conforme à l'une des revendications 8 à 10, caractérisée en ce qu'elle comprend un tube (35) fixé sur l'enceinte (12), coaxial à l'arbre (7a, 7b) de la turbine (5a, 5b), pour servir d'appui au clapet (27) en position ouverte de ce dernier.

12. Centrale hydro-électrique conforme à l'une des revendications 1 à 11, caractérisée en ce que la cheminée (36) de visite comprend un sas étanche (39).

13. Centrale hydro-électrique conforme à la revendication 12, caractérisée en ce que le sas étanche (39) est en communication avec une cloche immergée (46) dont le bord inférieur de la jupe est situé approximativement au niveau de l'entrée de l'arbre (7, 7a, 7b) de la turbine (5a, 5b) dans l'enceinte (12).

14. Centrale hydro-électrique conforme à l'une des revendications 1 à 13, caractérisée en ce que l'enceinte (12) comporte une double enveloppe (51, 52), et en ce que des ventilateurs (57) sont calés sur les arbres des machines tournantes pour faire circuler l'air dans la double enveloppe.

15. Centrale hydro-électrique conforme à la revendication 14, caractérisée en ce qu'elle comprend une batterie de réfrigération à eau (59) située dans l'enceinte (12) sur le parcours de circulation d'air.

16. Centrale hydro-électrique conforme à la revendication 15, caractérisée en ce que la batterie de réfrigération est reliée par des tuyauteries à une installation de récupération de chaleur.

17. Centrale hydro-électrique conforme à l'une des revendications 1 à 16, caractérisée en ce que l'enceinte (12) comprend des poutres pour supporter les machines tournantes, ces poutres (61) étant creuses et en communication avec le cours d'eau.

## Claims

1. Low-head hydroelectric power station comprising a dam (1) which forms an upstream pool (2) and a downstream pool (3) in a watercourse, at least one turbine (5a, 5b) located with a high flow-velocity passageway formed at the base of the dam (1), and at least one electric generator (24) coupled to the turbines (5a, 5b) and housed within a totally submerged casing (12), characterized in that this generator casing (12) is located within the upstream pool (2) at a distance from the dam (1) and the turbine (5a, 5b) and upstream of the high flow-velocity zone, this casing (12) being provided with an inspection shaft (36) having an opening located above the normal water level and fixed on a flooring structure (15) in a removable and demountable manner.

2. Hydroelectric power station in accordance with claim 1, characterized in that the generator casing (12) is entirely located at a distance (d) from the turbine (5a, 5b) which is at least equal to twice the diameter of the turbine runner (6a, 6b).

3. Hydroelectric power station in accordance with either claim 1 or claim 2, characterized in that the electric generator (24) is coupled mechanically to the turbines (5a, 5b) by means of respective 90° counter-motion devices in such a manner as to ensure that the shaft of the electric generator (24) is substantially horizontal and perpendicular to the direction of flow of water in the watercourse.

4. Hydroelectric power station in accordance with claim 3, characterized in that the counter-motion device comprises a speed-increasing unit (16a, 16b).

5. Hydroelectric power station in accordance with either claim 3 or claim 4, characterized in that it comprises a plurality of turbines (5a, 5b) in which the shafts are each coupled to a counter-motion device, the output shafts of these devices being arranged in coaxial pairs and coupled mechanically to the shaft of the electric generator.

6. Hydroelectric power station in accordance with claim 5, characterized in that the coaxial shafts of the counter-motion devices are coupled to the shaft of the electric generator by means of a speed-changing mechanism (22).

7. Hydroelectric power station in accordance with either claim 5 or claim 6, characterized in that each counter-motion device is fitted on its output shaft (18a, 18b) with a clutch-coupling device (19a, 19b).

8. Hydroelectric power station in accordance with any one of claims 1 to 7, characterized in that it comprises a movable shut-off valve (27) for the draft tube within the dam, this valve being slidably mounted on the shaft (7, 7a, 7b) of the turbine (5a, 5b) and capable of being actuated by control means attached to the generator casing (12).

9. Hydroelectric power station in accordance with claim 8, characterized in that the means for controlling the valve (27) comprise hydraulic jacks (31) attached to the generator casing (12).

10. Hydroelectric power station in accordance with claim 9, characterized in that the jacks (31) are provided with springs (34) so arranged as to apply the valve (27) against the draft tube.

11. Hydroelectric power station in accordance with any one of claims 8 to 10, characterized in that it comprises a tube (35) fixed on the generator casing (12) in coaxial relation to the shaft (7, 7a, 7b) of the turbine (5a, 5b) in order to serve as a support for the valve (27) in the open position of this latter.

12. Hydroelectric power station in accordance with any one of claims 1 to 11, characterized in that the inspection shaft (36) comprises a water-tight lock-chamber (39).

13. Hydroelectric power station in accordance with claim 12, characterized in that the water-tight lock-chamber (39) communicates with a submerged bell-housing (46) in which the bottom edge of the skirt is located approximately at the same level as the point of penetration of the shaft (7, 7a, 7b) of the turbine (5a, 5b) into the generator casing (12).

14. Hydroelectric power station in accordance with any one of claims 1 to 13, characterized in that the generator casing (12) is constituted by a double shell (51, 52) and that blowers (57) are keyed on the shafts of the rotating machines in order to produce a circulation of air within the double shell.

15. Hydroelectric power station in accordance with claim 14, characterized in that it comprises a water-cooling unit (59) located within the generator casing (12) on the path of the air flow.

16. Hydroelectric power station in accordance with claim 15, characterized in that the cooling unit is connected by means of piping to a heat-recovery installation.

17. Hydroelectric power station in accordance with any one of claims 1 to 16, characterized in that the generator casing (12) comprises beams for supporting the rotating machines, these beams (61) being of hollow construction and in communication with the watercourse.

## Patentansprüche

1. Wasserkraftwerk für geringe Fallhöhe, mit einem Staudamm (1), der an einem Wasserlauf eine stromaufwärtsseitige Stufe (2) und eine stromabwärtsseitige Stufe (3) schafft, wenigstens einer Turbine (5a, 5b), die in einer Leitung angeordnet ist, welche dem Wasser Geschwindigkeit verleiht und an der Basis des Staudamms (1) angeordnet ist, und mit wenigstens einem elektrischen Generator (24), der mit den Turbinen (5a, 5b) verbunden ist und innerhalb eines völlig eingetauchten Gehäuses (12) angeordnet ist, dadurch gekennzeichnet, daß das Gehäuse (12) in der stromaufwärtsseitigen Stufe (2) im Abstand von dem Staudamm (1) von der Turbine (5a, 5b) sowie stromaufwärts von der Zone, in der dem Wasser Geschwindigkeit erteilt wird, angeordnet ist, wobei dieses Gehäuses (12) einen Kontrollschacht (36) umfaßt, der oberhalb des normalen Wasserpegels mündet und an einer Sohle (15) entfernbar und demontierbar befestigt ist.

2. Wasserkraftwerk nach Anspruch 1, dadurch gekennzeichnet, daß das Gehäuse (12) vollständig in einem Abstand (d) von der Turbine (5a, 5b) angeordnet ist, der wenigstens gleich dem doppelten Durchmesser des Turbinenrades (6a, 6b) ist.

3. Wasserkraftwerk nach Anspruch 1 oder 2, dadurch gekennzeichnet, daß der elektrische Generator (24) mechanisch über 90°-Umlenkvorrichtungen mit den Turbinen (5a, 5b) derart verbunden ist, daß die Welle des elektrischen Generators (24) im wesentlichen waagerecht und rechtwinkelig zur Strömungsrichtung des Wassers in dem Wasserlauf ist.

4. Wasserkraftwerk nach Anspruch 3, dadurch gekennzeichnet, daß die Winkelumlenkvorrichtung ein Übersetzungselement (16a, 16b) umfaßt.

5. Wasserkraftwerk nach Anspruch 3 oder 4, dadurch gekennzeichnet, daß es mehrere Turbinen (5a, 5b) umfaßt, deren Wellen jeweils mit einer Winkelumlenkvorrichtung verbunden sind, wobei die Austrittswellen dieser Vorrichtungen als koaxiale Paare angeordnet und mechanisch mit der Welle des elektrischen Generators verbunden sind.

6. Wasserkraftwerk nach Anspruch 5, dadurch gekennzeichnet, daß die koaxialen Wellen der Winkelumlenkvorrichtungen mit der Welle des elektrischen Generators über ein stufenlos verstellbares Getriebe (22) verbunden sind.

7. Wasserkraftwerk nach Anspruch 5 oder 6, dadurch gekennzeichnet, daß jede Winkelumlenkvorrichtung an ihrer Austrittswelle (18a, 18b) mit einer Kupplungsvorrichtung (19a, 19b) versehen ist.

8. Wasserkraftwerk nach einem der Ansprüche 1 bis 7, dadurch gekennzeichnet, daß es einen beweglichen Schiebar (27) zum Verschließen der Wasserleitung in dem Staudamm umfaßt, wobei dieser Schieber auf der Welle (7a, 7b) der Turbine (5a, 5b) verschiebbar montiert ist und durch an dem Gehäuse (12) befestigte Steuermittel betätigbar ist.

9. Wasserkraftwerk nach Anspruch 8, dadurch gekennzeichnet, daß die Steuermittel des Schiebers (27) an dem Gehäuse (12) befestigte hydraulische Arbeitszylinder (31) umfassen.

10. Wasserkraftwerk nach Anspruch 9, dadurch gekennzeichnet, daß die Arbeitszylinder (31) Federn (34) umfassen, die so angeordnet sind, daß sie den Schieber (27) auf die Leitung drücken.

11. Wasserkraftwerk nach einem der Ansprüche 8 bis 10, dadurch gekennzeichnet, daß es ein Rohr (35) umfaßt, das an dem Gehäuse (12) koaxial zur Welle (7a, 7b) der Turbine (5a, 5b) befestigt ist, um als Abstützzung des Schiebers (27) in dessen geöffneter Stellung zu dienen.

12. Wasserkraftwerk nach einem der Ansprüche 1 bis 11, dadurch gekennzeichnet, daß der Kontrollschacht (36) eine Schleuse (39) umfaßt.

13. Wasserkraftwerk nach Anspruch 12, dadurch gekennzeichnet, daß die Schleuse (39) mit einer eingetauchten Glocke (46) in Verbindung ist, deren unterer Glockenrand ungefähr auf der Höhe des Eintritts der Welle (7a, 7b) der Turbine (5a, 5b) in das Gehäuse (12) liegt.

14. Wasserkraftwerk nach einem der Ansprüche 1 bis 13, dadurch gekennzeichnet, daß das Gehäuse (12) eine doppelte Hülle (51, 52) umfaßt und daß Ventilatoren (57) auf den Wellen der rotierenden Maschinen befestigt sind, um eine Luftzirkulation in der doppelten Hülle zu bewirken.

15. Wasserkraftwerk nach Anspruch 14, dadurch gekennzeichnet, daß es eine Wasserkühlgruppe (59) umfaßt, die sich in dem Gehäuse (12) auf dem Weg der Luftzirkulation befindet.

16. Wasserkraftwerk nach Anspruch 15, dadurch gekennzeichnet, daß die Kühlgruppe über Rohrleitungen an eine Wärmerückgewinnungsanlage angeschlossen ist.

17. Wasserkraftwerk nach einem der Ansprüche 1 bis 16, dadurch gekennzeichnet, daß das Gehäuse (12) Träger zum Tragen der rotierenden Maschinen umfaßt, wobei diese Träger (61) hohl sind und mit dem Wasserlauf in Verbindung sind.

FIG_1

FIG_2

FIG. 3

0012668

## FIG_4

## FIG_5

0012668

FIG.6

FIG.7

FIG.8

4

FIG_9

FIG_10

FIG_11